# EUROPÄISCHE PATENTSCHRIFT

(11) **EP 4 505 862 B1**
(45) Veröffentlichungstag und Bekanntmachung des Hinweises auf die Patenterteilung: **03.12.2025**
(21) Anmeldenummer: 24189696.8
(22) Anmeldetag: 19.07.2024
(51) Int. Cl.: A01D 75/12, A01F 29/09

(54) **WERKZEUG ZUM MONTIEREN EINES HÄCKSELMESSERS AN EINE HÄCKSELTROMMEL**
TOOL FOR MOUNTING A CHOPPING BLADE TO A CHOPPING DRUM
OUTIL POUR MONTER UN COUTEAU DE HACHAGE SUR UN TAMBOUR DE HACHAGE

(30) Priorität: 08.08.2023 DE 102023121066
(43) Veröffentlichungstag der Anmeldung: 12.02.2025
(73) Patentinhaber: Maschinenfabrik Bernard Krone GmbH & Co. KG, 48480 Spelle (DE)
(72) Erfinder: Hülsmann, Michael, 49599 Voltlage/Weese (DE)

(56) Entgegenhaltungen:
- DE-B4- 102013 011 088
- DE-U1- 202010 006 714

## Beschreibung

Die vorliegende Erfindung betrifft ein Werkzeug zum Montieren eines Häckselmessers an eine Häckseltrommel. Die Erfindung betrifft ferner ein Verfahren zum Montieren eines Häckselmessers an eine Häckseltrommel mit Hilfe eines solchen Werkzeugs.

Zum Zerkleinern von Erntegut werden in Erntemaschinen regelmäßig Aggregate eingesetzt, die eine rotierend angetriebene Häckseltrommel mit am Umfang verteilt angeordneten Häckselmessern und eine mit den Häckselmessern zusammenwirkende Gegenschneide umfassen. Üblicherweise werden die Häckselmesser an einem Messerhalter der Häckseltrommel lösbar befestigt, insbesondere durch Verschrauben. Dafür ist es bekannt, den Messerhalter ortsfest an der Häckseltrommel zu fixieren, beispielsweise durch Verschweißen

Für das Schnittergebnis beim Ernten ist neben der Schärfe der Schneidkante des Häckselmessers auch ein Schnittspalt zwischen einer Gegenschneide und dem Häckselmesser wesentlich. Ist der Schnittspalt zu groß, kann das Erntegut beim Schneiden gequetscht und dadurch beschädigt werden. Dabei können zudem Verstopfungen auftreten. Für einen akkuraten Schnitt ist der Schnittspalt für alle Häckselmesser der Häckseltrommel und jeweils entlang ihrer Schneidkanten möglichst gleichbleibend klein.

Aufgrund der Vielzahl an Häckselmessern an der Häckseltrommel ist es nur schwer möglich, alle Häckselmesser mit gleichem Schnittspalt zur Gegenschneide zu montieren. Erschwert wird dies noch dadurch, dass die Häckselmesser in der Regel V-förmig an der Häckseltrommel angeordnet sind, sodass die Schneidkanten der Häckselmesser sich immer nur punktuell auf Höhe der Gegenschneide befinden. Um die Schneidkanten jeweils über ihre gesamte Länge hinweg an der Gegenschneide auszurichten, wird die Häckseltrommel beim Ausrichten herkömmlich daher mehrfach manuell vor und zurück rotiert. Ein solches Vorgehen ist zeitintensiv und birgt für einen Monteur die Gefahr einer Verletzung bei unsachgemäßer Handhabung. Außerdem hängt der Erfolg dieses Vorgehens stark von den Fähigkeiten und Erfahrungen des Monteurs ab.

Bei Gebrauch stumpfen die Häckselmesser ab, sodass sie regelmäßig von einer Schleifeinrichtung nachgeschärft werden müssen. Da die Häckselmesser durch den Materialabtrag beim Schleifvorgang verkürzt werden, muss der Schnittspalt nach jedem Schleifvorgang wieder auf ein optimales Maß eingestellt werden. Dafür ist die Gegenschneide regelmäßig in Richtung an einen fiktiven, durch die Schneidkanten der Häckselmesser beschriebenen Hüllzylinder verstellbar ausgebildet.

Falls nicht alle Häckselmesser den gleichen Schnittspalt aufweisen, wird ein nach einer Montage weiter nach außen ragendes Häckselmesser durch die Schleifeinrichtung stärker zurückgeschliffen als ein weniger weit nach außen ragendes Häckselmesser. Dies führt zu unnötiger und ungleichmäßiger Abnutzung der Häckselmesser. Zudem ergibt sich ein erhöhter Verbrauch von Schleifmitteln für die Schleifeinrichtung.

Die DE 20 2010 006 714 U1 schlägt ein Hilfswerkzeug zum Ausrichten eines Häckselmessers relativ zur Gegenschneide vor. Für die Nutzung des Hilfswerkzeugs weist das Häckselmesser eine Ausnehmung auf, in die ein Exzenterzapfen des Hilfswerkzeugs aufnehmbar ist. Eine Drehung des Hilfswerkzeugs bewirkt eine Verschiebung des einzustellenden Häckselmessers mittels des Exzenterzapfens. Dadurch ist das Häckselmesser feinfühlig verschiebbar. Aufgrund der V-förmigen Anordnung des Häckselmessers an der Häckseltrommel ist es dabei dennoch erforderlich, die Häckseltrommel mehrfach vor und zurück zu Rotieren, um die Schneidkante über ihre gesamte Länge hinweg im Wesentlichen gleichbleibend an der Gegenschneide auszurichten.

Aufgabe der Erfindung ist es, die Erstmontage von Häckselmessern an eine Häckseltrommel präzise und bedienerfreundlich zu ermöglichen, so dass der Schnittspalt jedes der Häckselmesser zur Gegenschneide im Wesentlichen gleich und jeweils entlang ihrer Schneidkanten gleichbleibend ist, und die Standzeit der Häckselmesser dadurch erhöht ist. Eine weitere Aufgabe der Erfindung ist es, ein Ausweichen des Häckselmessers zu ermöglichen, so dass das Häckselmesser, insbesondere die Schneidkante, bei Auftreffen eines Fremdkörpers wie beispielsweise eines Steins so wenig wie möglich beschädigt wird.

Die Aufgabe wird gelöst mit einem Werkzeug mit den Merkmalen des unabhängigen Patentanspruchs 1, sowie mit einem Verfahren mit den Merkmalen des unabhängigen Patentanspruchs 12. Vorteilhafte Ausführungsformen sind den abhängigen Ansprüchen entnehmbar.

Dafür wird ein Werkzeug zum Montieren eines Häckselmessers an eine Häckseltrommel geschaffen. Das Werkzeug umfasst:
- einen Spannmechanismus zum lösbaren Fixieren des Werkzeugs in einer Hilfsbohrung der Häckseltrommel, wobei der Spannmechanismus reversibel von einem Grundzustand, in dem er ungespannt ist, in einen Spannzustand, in dem er gespannt ist, verstellbar ist;
- einen Rahmen;
- ein Verstellmittel, das relativ zum Spannmechanismus und/oder zum Rahmen in eine Verschieberichtung entlang einer Verschiebeachse reversibel verschiebbar ist und zum reversiblen Verstellen des Spannmechanismus vom Grundzustand in den Spannzustand vorgesehen ist; und
- ein Positionierungsmittel, das zum Positionieren des Häckselmessers an der Häckseltrommel vorgesehen ist.

Das Werkzeug ist dafür vorgesehen, eine Erstmontage eines neuen, das heißt noch ungenutzten, Häckselmessers an die Häckseltrommel zu vereinfachen. Dafür weist es das Positionierungsmittel auf, das durch Verstellen des Spannmechanismus vom Grundzustand in den Spannzustand in eine definierte Position verstellbar ist. Das Positionierungsmittel ist dafür vorgesehen, mit dem Häckselmesser zusammen zu wirken, so dass das an der Häckseltrommel vormontierte Häckselmesser durch Verstellen des Spannmechanismus an der Häckseltrommel in einer Montageposition positioniert wird. Die definierte Position des Positionierungsmittels ist so gewählt, dass die Schneidkante des Häckselmessers nach seiner Endmontage auf einem die Häckseltrommel zylindrisch umgebenden fiktiven Hüllzylinder mit konstantem Radius liegt. Bei Verwendung des Werkzeugs für alle Häckselmesser der Häckseltrommel liegen die Schneidkanten aller Häckselmesser im Wesentlichen gleichbleibend auf dem fiktiven Hüllzylinder. Die Formulierung "im Wesentlichen" berücksichtigt hier Fertigungstoleranzen der Häckselmesser und/oder der Häckseltrommel, insbesondere von Messerhaltern der Häckseltrommel.

Dadurch ist der Abstand der Häckselmesser der Häckseltrommel zur Gegenschneide nach ihrer Endmontage mit dem Werkzeug jeweils entlang ihrer Schneidkante und für alle Häckselmesser im Wesentlichen gleich. Nach der Endmontage müssen die Häckselmesser daher vor Inbetriebnahme der Häckseltrommel kaum noch geschliffen werden. Der Schleifvorgang, das heißt die Anzahl der erforderlichen Schleifzyklen, ist daher durch die Nutzung des Werkzeugs bei der Erstmontage der Häckselmesser minimiert und die Standzeit der Häckselmesser dementsprechend erhöht.

Dafür wird der Spannmechanismus des Werkzeugs bevorzugt in einer als Durchgangsbohrung ausgebildeten Hilfsbohrung der Häckseltrommel lösbar fixiert, indem er in die Hilfsbohrung eingeführt und dann vom ungespannten Grundzustand in den gespannten Spannzustand verstellt wird. Der Spannmechanismus dient dazu, das Werkzeug im Spannzustand fest in der Hilfsbohrung einzuspannen. Durch Zurückstellen des Spannmechanismus vom Spannzustand in den Grundzustand ist das Werkzeug, insbesondere nach der Endmontage des Häckselmessers, von der Häckseltrommel, insbesondere zerstörungsfrei, wieder lösbar.

Zum Verstellen des Spannmechanismus vom Grundzustand in den Spannzustand ist das Verstellmittel vorgesehen. Das Verstellmittel ist in eine Verschieberichtung entlang einer Verschiebeachse reversibel relativ zum Spannmechanismus und/oder zum Rahmen verschiebbar. Alternativ oder zusätzlich kann es auch um eine Drehachse drehbar ausgebildet sein. Dabei wirkt es mit dem Spannmechanismus zusammen, so dass dieser mit dem Verstellmittel vom Grundzustand in den Spannzustand und zurück verstellbar ist. Der Spannmechanismus kann dabei einstückig mit dem Rahmen gebildet sein.

In einer bevorzugten Ausführungsform ist das Verstellmittel an einem Schaft angeordnet. Der Schaft durchsetzt den Spannmechanismus vorzugsweise zumindest teilweise.

In einer bevorzugten Ausführungsform ist das Positionierungsmittel an einem ersten Ende des Verstellmittels über den Spannmechanismus hinausragend angeordnet. Dadurch kann es bei vormontiertem Häckselmesser mit einem Gegenpositionierungsmittel des Häckselmessers zusammenwirken, so dass dieses in die definierte Position verbringbar ist. Das Gegenpositionierungsmittel ist bevorzugt eine im Häckselmesser dafür explizit vorgesehene Ausnehmung, beispielsweise eine Positionierungsbohrung. Das Positionierungsmittel und das Gegenpositionierungsmittel sind bevorzugt bezüglich ihrer Ausmaße und ihrer Form korrespondierend zueinander ausgebildet, so dass sie einerseits leicht ineinander einschiebbar sind und andererseits eine sehr genaue Positionierung des Häckselmessers ermöglichen, wenn das Positionierungsmittel in das Gegenpositionierungsmittel eingreift und in der definierten Position angeordnet ist. In einer bevorzugten Ausführungsform sind das Positionierungsmittel dafür als, beispielsweise zylindrischer, Dorn, und das Gegenpositionierungsmittel als, beispielsweise zylindrische, Ausnehmung, insbesondere Durchgangsbohrung, ausgebildet.

In einer ebenfalls bevorzugten Ausführungsform bildet der Spannmechanismus das Positionierungsmittel. In dieser Ausführungsform wirkt der Spannmechanismus mit dem Gegenpositionierungsmittel des Häckselmessers zusammen, um das Häckselmesser in die definierte Position zu verbringen. Dafür sind der Spannmechanismus und das Gegenpositionierungsmittel bevorzugt bezüglich ihrer Ausmaße und ihrer Form korrespondierend zueinander ausgebildet, so dass sie einerseits leicht ineinander einschiebbar sind und andererseits eine sehr genaue Positionierung des Häckselmessers im Spannzustand ermöglichen, wenn der Spannmechanismus in das Gegenpositionierungsmittel eingreift.

Der Spannmechanismus weist bevorzugt mindestens zwei Spannelemente auf, wobei mindestens eines der Spannelemente relativ zur Verschiebeachse verstellbar ist. Beim Verstellen des Spannmechanismus vom ungespannten Grundzustand in den gespannten Spannzustand wird das verstellbare Spannelement vorzugsweise so verstellt, dass sein Abstand zur Verschiebeachse zumindest teilweise vergrößert ist. Bei Eingriff des Spannmechanismus in die Hilfsbohrung der Häckseltrommel wird das verstellbare Spannelement beim Verstellen des Spannmechanismus vom ungespannten Grundzustand in den gespannten Spannzustand in Richtung an eine die Hilfsbohrung begrenzende Innenwand hin verstellt. Dadurch werden die Spannelemente an die Innenwand gedrückt und der Spannmechanismus in der Hilfsbohrung verspannt. Weiterhin wird dadurch das am Verstellmittel angeordnete Positionierungsmittel in die definierte Position verstellt.

In einer bevorzugten Ausführungsform sind alle Spannelemente des Spannmechanismus relativ zur Verschiebeachse verstellbar. Der Schaft und/oder der Spannmechanismus, insbesondere die Spannelemente, dieser Ausführungsform sind bevorzugt konzentrisch zur Verschiebeachse angeordnet. In dieser Ausführungsform sind weiterhin bevorzugt das Positionierungsmittel und/oder das Verstellmittel konzentrisch zur Verschiebeachse angeordnet. Der Schaft, das Verstellmittel und/oder das Positionierungsmittel können ganz besonders bevorzugt rotationssymmetrisch ausgebildet sein. Weiterhin können der Schaft, das Verstellmittel und/oder das Positionierungsmittel einstückig hergestellt sein. Dadurch sind diese Bauelemente kostengünstig und mit vergleichsweise hoher Toleranzgüte als Drehteil herstellbar.

Vorzugsweise sind die Spannelemente baugleich ausgebildet. In einer Umfangsrichtung um die Verschiebeachse sind sie bevorzugt gleichmäßig verteilt angeordnet. Ein Abstand der Spannelemente voneinander ist dabei im Grundzustand vorzugsweise zumindest teilweise kleiner als im Spannzustand.

In einer bevorzugten Ausführungsform sind die Spannelemente an einem gemeinsamen Flanschteil miteinander verbunden. Dadurch behalten sie beim Verstellen des Spannmechanismus vom Grundzustand in den Spannzustand am Flanschteil ihren Abstand zueinander bei. Sie werden dann an ihrem dem Flanschteil gegenüberliegenden Ende auseinandergedrückt, so dass sich ihr Abstand dort beim Verstellen des Spannmechanismus vom Grundzustand in den Spannzustand vergrößert. Es ist auch eine Ausführungsform des Spannmechanismus bevorzugt, bei dem die Spannelemente nicht durch ein gemeinsames Flanschteil miteinander verbunden sind. In dieser Ausführungsform können sie sich gleichmäßig zueinander verstellen, wenn der Spannmechanismus vom Grundzustand in den Spannzustand oder zurück verstellt wird.

Dabei ist es zudem bevorzugt, dass der Schaft mittig des Spannmechanismus angeordnet ist. Ganz besonders bevorzugt durchsetzt der Schaft den Spannmechanismus mittig. Durch Verstellen des Spannmechanismus vom Grundzustand in den Spannzustand kann der Schaft bei dieser Ausführungsform des Werkzeugs in der Hilfsbohrung zentriert werden. Im Spannzustand sind das Positionierungsmittel und das Gegenpositionierungsmittel dann fluchtend zur Hilfsbohrung angeordnet. Dadurch ist die Position des Positionierungsmittels bei in der Hilfsbohrung eingespanntem Spannmechanismus unabhängig von einem Drehwinkel des Werkzeugs um die Verschiebeachse immer gleich. Dabei ist es ebenfalls bevorzugt, dass der Schaft den Spannmechanismus vollständig durchsetzt. Das Werkzeug ist dadurch besonders leicht bedienbar.

In einer ebenfalls bevorzugten Ausführungsform ist das Verstellmittel kegelförmig ausgebildet. Besonders bevorzugt verjüngt es sich in oder gegen die Verschieberichtung. In Abhängigkeit von der Positionierung des Verstellmittels am Schaft, das heißt in Abhängigkeit davon, ob das Verstellmittel in Verschieberichtung vor oder hinter dem Spannmechanismus angeordnet ist, wird beim Verschieben des Verstellmittels entweder in oder gegen die Verschieberichtung das verstellbare Spannelement oder werden die Spannelemente aufgrund der kegelförmigen Ausprägung des Verstellmittels mit diesem auseinandergedrückt. Dadurch vergrößert sich sein oder ihr Abstand zum Schaft und/oder zueinander zumindest teilweise. Bei Eingriff des Spannmechanismus in die Hilfsbohrung der Häckseltrommel wird das verstellbare Spannelement oder werden die verstellbaren Spannelemente dadurch gegen die Innenwand gedrückt und der Spannmechanismus so in der Hilfsbohrung verspannt.

In einer weiteren bevorzugten Ausführungsform ist das Verstellmittel elliptisch ausgebildet. In dieser Ausführungsform ist es bevorzugt, dass das Verstellmittel und/oder der Schaft in eine Drehrichtung drehbar ist. Das Verstellmittel kann dabei zusätzlich in Verschieberichtung verschiebbar ausgebildet sein. Dabei gerät das Verstellmittel in Anlage an das verstellbare oder die Spannelemente. Dadurch wird der Spannmechanismus vom Grundzustand in den Spannzustand verstellt. Durch Zurückdrehen des Schaftes kann der Spannmechanismus dieser Ausführungsform vom Spannzustand in den Grundzustand zurückgestellt werden.

In einer weiteren bevorzugten Ausführungsform weist das Verstellmittel für jedes Spannelement jeweils einen Umfangsbereich mit einem sich zur Verstellachse vergrößernden Radius auf. Auch bei dieser Ausführungsform ist es bevorzugt, dass das Verstellmittel in die Drehrichtung drehbar ist. Es kann ebenfalls zudem verschiebbar ausgebildet sein. Dabei wird das Verstellmittel, insbesondere mit dem Schaft, gedreht. Die Umfangsbereiche des Verstellmittels mit dem sich vergrößernden Radius geraten beim Drehen jeweils in Anlage an die ihnen zugeordneten Spannelemente. Dadurch wird der Spannmechanismus vom Grundzustand in den Spannzustand verstellt. Durch Zurückdrehen des Schaftes kann der Spannmechanismus dieser Ausführungsform vom Spannzustand in den Grundzustand zurückgestellt werden.

Das Werkzeug umfasst bevorzugt ein manuell betätigbares Betätigungsmittel, welches zum Verschieben des Verstellmittels relativ zum Rahmen vorgesehen ist. Der Spannmechanismus wird daher mit dem Betätigungsmittel betätigt, das heißt vom Grundzustand in den Spannzustand oder zurück verstellt. Das Betätigungsmittel ist bevorzugt an einer dem ersten Ende des Verstellmittels abgewandten Seite des Verstellmittels angeordnet. Vorzugsweise ist es an einem dem Verstellmittel abgewandten zweiten Ende des Schafts angeordnet.

In einer bevorzugten Ausführungsform weist das Betätigungsmittel ein Gewinde auf, das mit einem Gegengewinde am Schaft zusammenwirkt, sodass der Schaft in die Verschieberichtung verschoben wird, wenn das Betätigungsmittel in oder gegen eine Drehrichtung gedreht wird. Dafür ist der Schaft vorzugsweise gegen ein Verdrehen relativ zum Rahmen gesichert. Durch die Verdrehsicherung wird verhindert, dass der Schaft sich mit dem Betätigungsmittel dreht. Durch das Drehen des Betätigungsmittels wird das Verstellmittel mit dem Schaft in die Verschieberichtung verschoben und der Spannmechanismus daher vom Grundzustand in den Spannzustand verstellt.

Das Betätigungsmittel ist bevorzugt als ein, insbesondere in und gegen die Drehrichtung um eine Drehachse drehbar gelagerter, Drehknopf ausgebildet. Dabei ist es besonders bevorzugt, dass die Drehachse des Betätigungsmittels die Verschiebeachse des Schafts ist. Der Drehknopf kann dann fluchtend zur Verschiebeachse und zum Schaft angeordnet sein. Indem er an dem, dem ersten Ende des Verstellmittels, an dem das Positionierungsmittel angeordnet ist, gegenüberliegenden zweiten Ende des Schafts angeordnet ist, ist die Handhabung des Werkzeugs sehr einfach.

In einer ebenfalls bevorzugten Ausführungsform ist das Betätigungsmittel als ein, insbesondere in und gegen die Drehrichtung um eine Drehachse drehbar gelagerter, Hebel ausgeführt. Dabei kann der Hebel einen Umschaltmechanismus, beispielsweise eine Ratsche, aufweisen, der in einer ersten Stellung beim Hin- und Herdrehen des Hebels eine Verschiebung des Schaftes in oder gegen die Verschieberichtung bewirkt, und in einer zweiten Stellung beim Hin- und Herdrehen des Hebels eine demgegenüber entgegen gesetzt gerichtete Verschiebung bewirkt.

Beide Ausführungsformen des Betätigungsmittels ermöglichen ein einfaches manuelles Verstellen des Spannmechanismus. Dabei ist eine Spannkraft des Spannmechanismus, mit der das Werkzeug in der Hilfsbohrung festgelegt wird, durch das manuelle Drehen des Betätigungsmittels dosierbar.

Das Werkzeug weist zudem bevorzugt ein Haltemittel zum Festhalten des Werkzeugs während des Betätigens des Betätigungsmittels auf. Das Haltemittel ist bevorzugt vom Betätigungsmittel beabstandet und ortsfest am Rahmen angeordnet. Mit dem Haltemittel kann das Werkzeug mit der einen Hand des Monteurs festgehalten werden, während dieser das Betätigungsmittel mit der anderen Hand betätigt. In der Ausführungsform, in der das Betätigungsmittel als Drehknopf ausgebildet ist, ist das Haltemittel bevorzugt als hebelförmiger Griff ausgebildet. In der Ausführungsform, in der das Betätigungsmittel als Hebel ausgebildet ist, ist das Haltemittel hingegen bevorzugt als ein knopfförmiger Griff ausgebildet. In einer alternativen Ausführungsform oder zusätzlich kann das Werkzeug während des Betätigens des Betätigungsmittels auch am Rahmen abgestützt sein. Die Handhabung des Werkzeugs ist mit Hilfe des Haltemittels demgegenüber jedoch einfacher.

In einer ebenfalls bevorzugten Ausführungsform weist das Werkzeug einen Aktor auf, mit dem das Verstellmittel und/oder der Schaft verschiebbar ist. In dieser Ausführungsform kann das Werkzeug ein elektrisches Bedienelement aufweisen, dass als Betätigungsmittel zum Ansteuern des Aktors dient. Ein solches Bedienelement kann beispielsweise als Taster, Schalter oder Handrad ausgebildet sein.

Bei es einer Anordnung aus einem solchen Werkzeug und einer Häckseltrommel zum Zerkleinern von Erntegut weist die Häckseltrommel wenigstens einen Messerhalter auf, an den ein Häckselmesser montierbar, insbesondere anschraubbar, ist. Zudem weisen der Messerhalter die Hilfsbohrung zum Einführen des Spannmechanismus des Werkzeugs, und das Häckselmesser ein Gegenpositionierungsmittel zum Einführen des Positionierungsmittels des Werkzeugs auf.

Bei am Messerhalter vormontiertem Häckselmesser ist der Spannmechanismus in die Hilfsbohrung einführbar, wobei das Positionierungsmittel in das Gegenpositionierungsmittel eingreift. Dafür ist ein Durchmesser des Spannmechanismus im Grundzustand kleiner als ein Durchmesser der Hilfsbohrung. Vormontiert bedeutet hier, dass das Häckselmesser (noch) lose, insbesondere (noch) verschiebbar, am Messerhalter montiert ist. Durch Verspannen des Spannmechanismus ist das Positionierungsmittel in die definierte Position verschiebbar. Dabei verschiebt sich das vormontierte Häckselmesser relativ zum Messerhalter.

Da der Spannmechanismus im verspannten Zustand im Messerhalter fixiert ist, kann sich das Häckselmesser bei einem anschließenden Festlegen, insbesondere Festschrauben, des Häckselmessers am Messerhalter nicht mehr verschieben und behält somit eine durch das Positionierungsmittel bewirkte Montageposition bei.

Mit Hilfe des Werkzeugs wird sichergestellt, dass ein Schnittspalt zwischen dem Häckselmesser und einer Gegenschneide entlang einer Schneidkante des Häckselmessers gleichbleibend ist. Um dies zu gewährleisten, werden zur Montage jeweils eines Häckselmessers bevorzugt zwei solche Werkzeuge genutzt. Der Messerhalter weist dafür bevorzugt zwei in einem Abstand voneinander beabstandete Hilfsbohrungen auf, wobei das Häckselmesser zwei in demselben Abstand voneinander beabstandete Gegenpositionierungsmittel aufweist. Durch gleichzeitige Nutzung der beiden Werkzeuge beim Montieren des Häckselmessers ist ein solcher gleichbleibender Schnittspalt wiederholbar einfach und präzise erzielbar. Eine Erstmontage des Häckselmessers an die Häckseltrommel ist dadurch sehr einfach. Dabei besteht auch keine Notwendigkeit mehr, die Häckseltrommel hin-und herzudrehen, um über die Längen der Schneidkanten der Häckselmesser jeweils den gleichbleibenden Schnittspalt zu erzielen. Die Verletzungsgefahr für den Monteur ist dadurch erheblich verringert.

Die Häckseltrommel weist bevorzugt eine Vielzahl solcher Messerhalter auf, an die jeweils ein solches Häckselmesser montierbar sind. Durch Nutzung von zwei solchen Werkzeugen kann die Erstmontage aller Häckselmesser präzise und schnell, insbesondere ohne ein Vielfaches Hin- und Herdrehen der Häckseltrommel, erfolgen. Aufgrund der dabei sehr genauen Positionierung und Ausrichtung der Häckselmesser liegen die Schneidkanten der Häckselmesser nach ihrer Endmontage auf dem fiktiven Hüllzylinder. Dadurch ist ein Schleifen der Häckselmesser bei einem abschließenden Schleifvorgang kaum noch erforderlich, so dass die Standzeit der Häckselmesser im Vergleich zu einer Standzeit bei herkömmlicher Erstmontage der Häckselmesser deutlich erhöht ist.

Die Aufgabe wird weiterhin gelöst mit einem Verfahren zum Montieren eines Häckselmessers an eine Häckseltrommel, bei dem das Häckselmesser mit einem solchen ersten Werkzeug an der Häckseltrommel positioniert, und dann an der Häckseltrommel, insbesondere an einem Messerhalter der Häckseltrommel, festgelegt, insbesondere angeschraubt, wird, wobei das Werkzeug anschließend von der Häckseltrommel gelöst wird. Das Werkzeug kann dann spannungsfrei und somit sehr benutzerfreundlich von der Häckseltrommel genommen werden.

Durch die Nutzung des Werkzeugs ist sichergestellt, dass ein Abstand des Häckselmessers zur Gegenschneide entlang der gesamten Schneidkante des Häckselmessers im Wesentlichen gleich ist. Dadurch ist eine Anzahl der notwendigen Schleifzyklen vor dem ersten Gebrauch des Häckselmessers gering und die Standzeit des Häckselmesser hoch.

Weiterhin wird das Werkzeug nach dem Festlegen des Häckselmessers von der Häckseltrommel vollständig gelöst. Die Positionierung erfolgt vollständig ohne zusätzliche Bauteile wie beispielsweise Stifte. Dadurch kann das Häckselmesser bei Auftreffen eines Fremdkörpers wie beispielsweise eines Steins ausweichen. Die Gefahr einer starken Beschädigung oder sogar Zerstörung des Häckselmessers durch einen auftreffenden Fremdkörper ist dadurch erheblich verringert.

Weiterhin weist die Häckseltrommel wenigstens einen Messerhalter auf, wobei das Häckselmesser an den Messerhalter montierbar, insbesondere anschraubbar, ist. Ferner weisen der Messerhalter eine erste Hilfsbohrung und das Häckselmesser ein erstes Gegenpositionierungsmittel auf. Das Verfahren umfasst die Schritte:
a. Einführen eines Spannmechanismus des ersten Werkzeugs in die erste Hilfsbohrung, wobei sich der Spannmechanismus in einem Grundzustand befindet, sodass ein Positionierungsmittel des ersten Werkzeugs in das erste Gegenpositionierungsmittel des Häckselmessers eingreift; und
b. Überführen des Spannmechanismus des ersten Werkzeugs vom Grundzustand in einen Spannzustand, wobei der Spannmechanismus des ersten Werkzeugs in der ersten Hilfsbohrung verspannt und das Positionierungsmittel des ersten Werkzeugs relativ zur ersten Hilfsbohrung in eine definierte Position verstellt, insbesondere zentriert, wird.

Im Grundzustand ist ein Abstand der Spannelemente des Spannmechanismus relativ zueinander klein. In einer bevorzugten Ausführungsform liegen die Spannelemente im Grundzustand, insbesondere flächig, aneinander an. Dadurch ist der Spannmechanismus, insbesondere reibungsfrei, in die erste Hilfsbohrung des Messerhalters einführbar, sodass das Positionierungsmittel des ersten Werkzeugs in das erste Gegenpositionierungsmittel des Häckselmessers eingreift. Durch Verstellen des Spannmechanismus vom Grundzustand in den Spannzustand wird ein Abstand zwischen den Spannelementen zumindest teilweise vergrößert, bis diese zumindest teilweise an einer Innenwand der Hilfsbohrung anliegen und der Spannmechanismus in der Hilfsbohrung verspannt ist. Beim Vergrößern des Abstandes der Spannelemente relativ zueinander verstellen sich das Verstellmittel und/oder der Schaft, und damit das Positionierungsmittel, so dass sich das Häckselmesser verschiebt. Bei konzentrischer Anordnung des Spannmechanismus und des Schaftes um die Verschiebeachse wird das Verstellmittel und/oder der Schaft in der Hilfsbohrung zentriert. Durch Verspannen des Spannmechanismus in der Hilfsbohrung wird das Werkzeug form- und/oder kraftschlüssig am Messerhalter fixiert. Das Positionierungsmittel ist in der definierten Position angeordnet, wenn der Spannmechanismus in der Hilfsbohrung verspannt ist. Da das Positionierungsmittel in das Gegenpositionierungsmittel eingreift, wird das Häckselmesser dabei in die Montageposition verstellt, insbesondere verschoben.

Das Häckselmesser muss dabei nicht wie herkömmlich zeitaufwändig hin- und herbewegt werden, um es auszurichten. Die Montage der Häckselmesser kann somit nicht nur sehr präzise, sondern auch sehr schnell durchgeführt werden. Zudem kann das Häckselmesser mit dem Werkzeug auch von weniger erfahrenen und/oder geschulten Monteuren montiert werden.

Es ist bevorzugt, dass das Häckselmesser vor Einführen des Spannmechanismus in die Hilfsbohrung am Messerhalter vormontiert wird. Vormontiert bedeutet in diesem Zusammenhang, dass das Häckselmesser noch wenigstens geringfügig positionsveränderbar, insbesondere verschiebbar, am Messerhalter montiert ist. Dadurch kann es noch, insbesondere ohne großen Kraftaufwand, mit Hilfe des Werkzeugs in seine Montageposition verschoben werden. Dabei ist es bevorzugt, dass die Hilfsbohrung des Messerhalters und das Gegenpositionierungsmittel des vormontierten Häckselmessers im vormontierten Zustand wenigstens geringfügig einander überlappend angeordnet sind. Dadurch kann das Positionierungsmittel leicht in das Gegenpositionierungsmittel eingeführt werden. Durch die Vormontage des Häckselmessers hat der Monteur während der Nutzung des Werkzeugs beide Hände frei, so dass die Nutzung des Werkzeugs für ihn einfach ist.

In Abhängigkeit von der Position der Hilfsbohrung und des Gegenpositionierungsmittels wird das Häckselmesser durch Nutzung des einen ersten Werkzeugs mittig oder seitlich ausgerichtet. In Abhängigkeit von den Formen des Messerhalters und/oder des Häckselmessers, insbesondere vom Vorhandensein eines oder mehrerer Anschlagmittel zur Ausrichtung des Häckselmessers, kann die Nutzung nur eines Werkzeugs bei der Montage des Häckselmessers ausreichend sein.

Jedoch sind herkömmliche Häckselmesser länglich ausgebildet und zudem in einem Winkel zu einer Rotationsachse der Häckseltrommel an dieser befestigt. Zudem ist es bevorzugt, dass das Häckselmesser im Betrieb der Häckseltrommel bei Auftreffen auf ein Hindernis wie beispielsweise einen Stein ausweichen kann, so dass es nicht beschädigt wird. Daher ist es weiterhin bevorzugt, für das Ausrichten des Häckselmessers keine Stifte und auch keine Anschlagmittel vorzusehen.

Um das Häckselmesser dennoch entlang seiner gesamten Schneidkante an einem fiktiven Hüllzylinder um die Rotationsachse der Häckseltrommel auszurichten, werden für das Montieren bevorzugt zwei Werkzeuge genutzt. Vorzugsweise werden die Werkzeuge während der Montage an gegenüberliegenden Enden des Häckselmessers angeordnet.

In einer bevorzugten Ausführungsform wird zum Montieren des Häckselmessers ein solches zweites Werkzeug genutzt, wobei der Messerhalter eine zweite Hilfsbohrung und das Häckselmesser ein zweites Gegenpositionierungsmittel aufweisen, wobei das Verfahren die folgenden weiteren Schritte umfasst:
c. Einführen des Spannmechanismus des zweiten Werkzeugs in die zweite Hilfsbohrung, sodass das Positionierungsmittel des zweiten Werkzeugs in das zweite Gegenpositionierungsmittel des Häckselmessers eingreift; und
d. Überführen des Spannmechanismus des zweiten Werkzeugs vom Grundzustand in den Spannzustand, wobei der Spannmechanismus des zweiten Werkzeugs in der zweiten Hilfsbohrung verspannt und das Positionierungsmittel des zweiten Werkzeugs relativ zur zweiten Hilfsbohrung in eine definierte Position verstellt, insbesondere zentriert, wird.

Das zweite Werkzeug wird daher in analoger Weise zum ersten Werkzeug zum Ausrichten des Häckselmessers genutzt. Dabei wird das Häckselmesser bevorzugt mit dem zweiten Werkzeug an einem dem ersten Werkzeug gegenüberliegenden Ende des Häckselmessers ausgerichtet. Im Ergebnis ist das Häckselmesser optimal am Messerhalter angeordnet, so dass seine Schneidkante im Wesentlichen auf dem, die Rotationsachse der Häckseltrommel umgebenden, fiktiven Hüllzylinder angeordnet ist.

Vorzugsweise wird das Häckselmesser anschließend am Messerhalter festgelegt. In einer bevorzugten Ausführungsform wird es am Messerhalter festgeschraubt. Durch die Nutzung der Werkzeuge kann beim Festschrauben ein Verdrehen oder Verschieben des Häckselmessers verhindert werden.

Die Verwendung von Schrauben für das Festlegen des Häckselmessers am Messerhalter hat den Vorteil, dass diese, insbesondere mit herkömmlichen Schraubenschlüsseln, vom Messerhalter wieder lösbar und das Häckselmesser dadurch schnell austauschbar ist. Zudem hat die Verwendung von Schrauben den Vorteil, dass die Verschiebbarkeit des Häckselmessers bei seiner Vormontage verhältnismäßig feinfühlig einstellbar ist. Dies vereinfacht die Montage.

Beide Werkzeuge werden bevorzugt nach dem Festlegen des Häckselmessers durch Überführen des jeweiligen Spannmechanismus vom Spannzustand in den Grundzustand von der Häckseltrommel gelöst. Vorteilhafterweise löst sich dabei auch eine Spannung zwischen dem Werkzeug, dem Messerhalter und/oder dem Häckselmesser, die sich aufgrund eines Setzverhaltens des Häckselmessers bei der Endmontage einstellen kann. Das Positionierungsmittel verbleibt dabei an seinem jeweiligen Werkzeug, so dass keine weiteren Bauteile für die Positionierung der Häckselmesser benötigt werden. Die Werkzeuge sind anschließend für die Montage eines weiteren Häckselmessers verwendbar.

Das Verfahren hat den Vorteil, dass der Monteur das Häckselmesser ohne manuelles Verschieben des Häckselmessers und/oder Hin- und Herdrehen der Häckseltrommel durchführen kann. Die Montage ist daher sehr schnell und genau durchführbar, wobei die Verletzungsgefahr für den Monteur gering ist.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch einen Ausschnitt einer Anordnung aus einem Häckselaggregat und einem erfindungsgemäßen Werkzeug einer ersten Ausführungsform;
- Fig. 2: in (a) - (c) schematisch verschiedene perspektivische Ansichten und in (d) eine Schnittansicht des Werkzeugs der Fig. 1;
- Fig. 3: schematisch in (a) eine perspektivische Ansicht und in (b) eine Schnittansicht eines erfindungsgemäßen Werkzeugs einer zweiten Ausführungsform; und
- Fig. 4: schematisch in (a) und (b) jeweils eine Ausführungsform eines an einem Messerhalter angeordneten Häckselmessers in einer perspektivischen Ansicht.

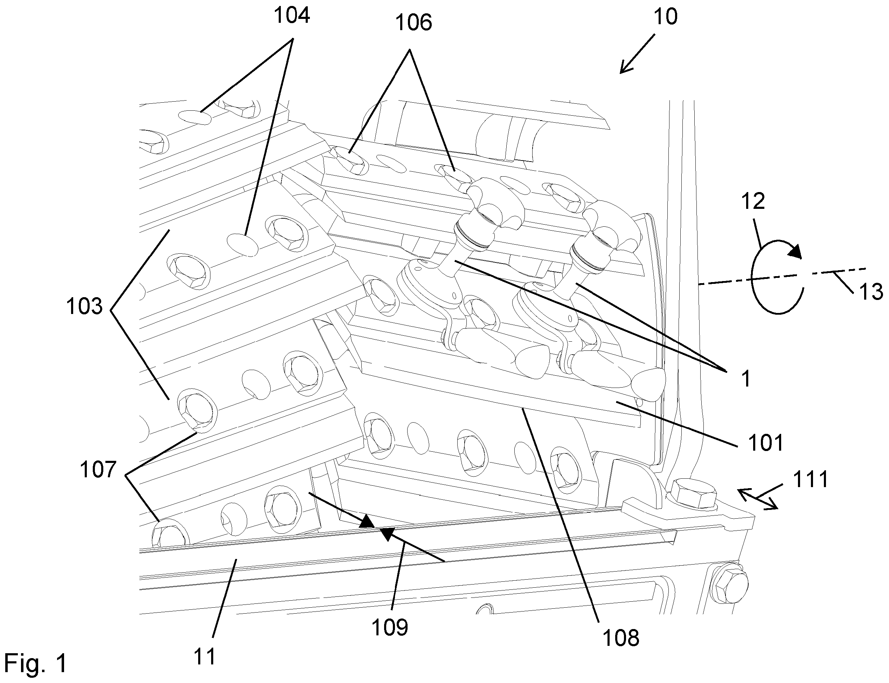

Fig. 1 zeigt schematisch einen Ausschnitt aus einem Häckselaggregat, welches eine um eine Rotationsachse 13 in eine Rotationsrichtung 12 drehbare Häckseltrommel 10 und eine Gegenschneide 11 umfasst. Die Häckseltrommel 10 weist eine Vielzahl Messerhalter 103 auf, an denen jeweils ein Häckselmesser 101 montiert ist. Zur Verdeutlichung einer Montage eines der Häckselmesser 101 sind an einem der Messerhalter 103 zwei erfindungsgemäße Werkzeuge 1 einer ersten Ausführungsform voneinander beabstandet angeordnet.

Das Häckselaggregat 10 ist zum Zerkleinern von Erntegut vorgesehen. Als solches kann es beispielsweise in einem Feldhäcksler eingesetzt werden.

Um die Häckselmesser 101 vom Messerhalter 103 lösen und austauschen zu können, sind diese jeweils mittels Schrauben 106 an ihrem Messerhalter 103 befestigt. Die Messerhalter 103 weisen dafür Durchgangsbohrungen 107 zur Aufnahme der Schrauben 106 auf.

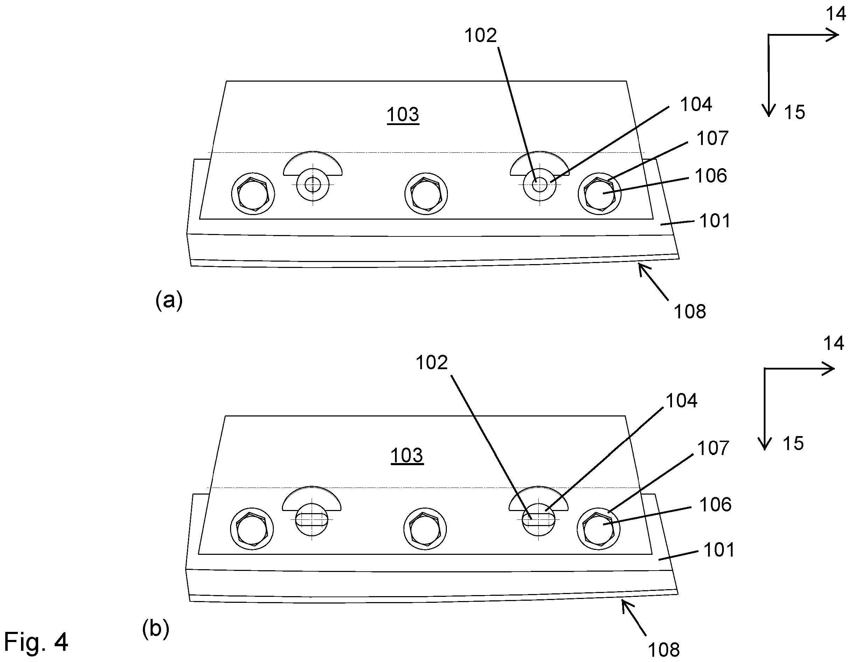

Die Gegenschneide 11 ist parallel zur Rotationsachse 13 der Häckseltrommel 10 angeordnet und wirkt im Betrieb des Häckselaggregats mit einer Schneidkante 108 (s. Fig. 4) der Häckselmesser 101 zusammen. Im Betrieb rotiert die Häckseltrommel 10 in Rotationsrichtung 12 um die Rotationsachse 13 und zerkleinert Erntegut zwischen der Gegenschneide 11 und der Schneidkante 108.

Um einen sauberen Schnitt ohne ein Quetschen des Erntegutes zu erreichen, ist die Einstellung eines Schnittspaltes 109 zwischen der Gegenschneide 11 und der Schneidkante 108 der Häckselmesser 101 maßgeblich. Zum Einstellen des Schnittspaltes 109 ist die Gegenschneide 11 in und gegen eine Verstellrichtung 111 relativ zur Häckseltrommel 10 verstellbar.

Um zu vermeiden, dass ein Häckselmesser 101 im Betrieb der Häckseltrommel 10 auf die Gegenschneide 11 aufschlägt, muss der Schnittspalt 109 aller Häckselmesser zur Gegenschneide 11 und jeweils entlang ihrer Schneidkanten 108 gleich sein. Dies wird herkömmlich durch ein Schleifen aller Häckselmesser 101 und ein Verstellen der Gegenschneide 11 vor Inbetriebnahme der Häckseltrommel 10 erreicht. Die Schneidkanten 108 der Häckselmesser 101 liegen nach dem Schleifen auf einem fiktiven Hüllzylinder (nicht gezeigt) um die Rotationsachse 13 der Häckseltrommel 10.

Dafür umfasst das Häckselaggregat eine Schleifeinrichtung (nicht dargestellt). Das Schleifen erfolgt nicht nur vor der ersten Inbetriebnahme der Häckseltrommel 10, insbesondere nach einem Häckselmessertausch, sondern auch regelmäßig im Erntebetrieb, um die Häckselmesser 101 nachzuschärfen und den Schnittspalt 109 durch Verstellen der Gegenschneide 11 in und gegen die Verstellrichtung 111 zu optimieren. Die Schleifeinrichtung kann in an sich bekannter Art und Weise ausgebildet sein und wird daher hier nicht weiter beschrieben.

Die Häckselmesser 101 sind jeweils in einem Winkel (nicht gezeigt) zur Rotationsachse 13 an der Häckseltrommel 10 angeordnet. Dabei sind sie in einer Umfangsrichtung (nicht gezeigt) um die Häckseltrommel 10 gleichmäßig verteilt angeordnet. In Richtung der Rotationsachse 13 benachbarte Häckselmesser 101 sind in Umfangsrichtung um einen Drehwinkel (nicht gezeigt) versetzt und V-förmig zueinander angeordnet. Diese Anordnung ermöglicht einen scherenartigen Schnitt des Erntegutes zwischen der Schneidkante 108 und der Gegenschneide 11. Jedoch befindet sich dadurch im Betrieb der Häckseltrommel 10 immer nur ein Punkt eines jeden Häckselmessers 101 jeweils auf Höhe der Gegenschneide 11. Dadurch erfordert ein manuelles Ausrichten der Häckselmesser 101 an der Gegenschneide 11, welches einen überall möglichst gleichen Schnittspalt 109 bewirkt, während einer Montage für jedes Häckselmesser 101 jeweils ein mehrfaches Hin- und Herdrehen der Häckseltrommel 10 um die Rotationsachse 13. Dies ist für einen Monteur nicht nur zeitaufwendig und schwierig. Sondern zudem birgt es eine hohe Verletzungsgefahr.

Bei ungleichem Schnittspalt 109 zwischen den Häckselmessern 101 und der Gegenschneide 11 werden näher an der Gegenschneide 11 angeordnete Häckselmesser 101 zudem durch die Schleifeinrichtung stärker geschliffen als weiter beabstandete Häckselmesser 101. Ein ungenaues manuelles Ausrichten der Häckselmesser 101 führt daher zu ungleich stark geschliffenen Häckselmessern und einer entsprechend verringerten Standzeit.

Die Werkzeuge 1 ermöglichen demgegenüber das Montieren aller Häckselmesser 101 mit gleichem Schnittspalt 109. Sie sind jeweils in einer für die Montage vorgesehenen Hilfsbohrung 104 desjenigen Messerhalters 103 angeordnet, an den das Häckselmesser 101 zu montieren ist.

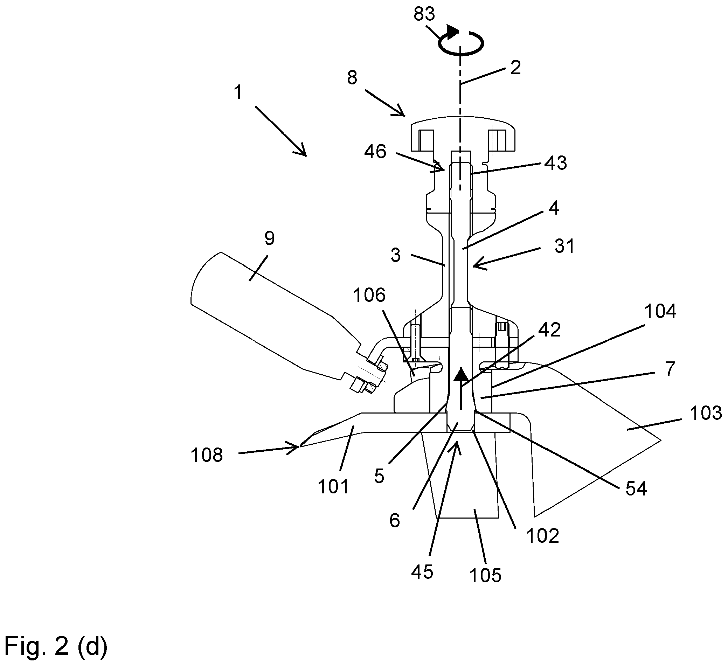

Dargestellt sind zwei baugleiche Werkzeuge 1 für die Montage des Häckselmessers 101. Die Werkzeuge 1 sind beide an demselben Messerhalter 103 angelegt. Ein Häckselmesser 101 ist unterhalb des Messerhalters 103 mittels Schrauben 106 an diesem montiert. Zur Aufnahme der Schrauben 106 weist der Messerhalter 103 Durchgangsbohrungen 107 auf. Damit das Häckselmesser 101 verschiebbar ist, umfasst die Häckseltrommel 10 ein Kontermittel 105 (s. Fig. 2 (d), in das eine oder mehrere Schrauben 106 einschraubbar sind. Das Kontermittel 105 ist bevorzugt ein separates Bauteil und wird bei der Montage unterhalb des Häckselmessers 101 montiert.

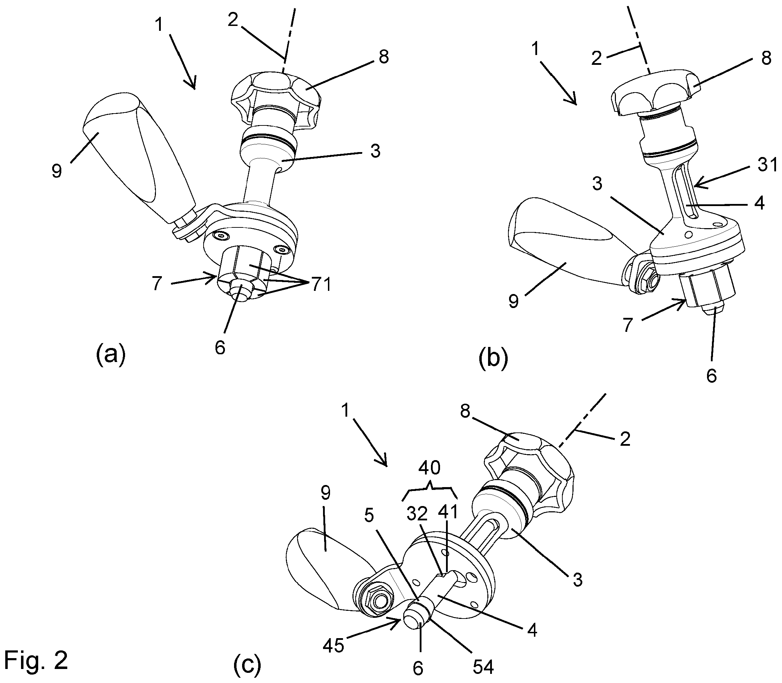

Fig. 2 zeigt in (a) - (c) schematisch verschiedene perspektivische Ansichten der Werkzeuge 1 der Fig. 1.

Das Werkzeug 1 weist einen Spannmechanismus 7 auf, der zum lösbaren Fixieren des Werkzeugs 1 in der Hilfsbohrung 104 des Messerhalters 103 der Häckseltrommel 10 vorgesehen ist. Der Spannmechanismus 7 ist dafür reversibel von einem Grundzustand, in dem er ungespannt ist, in einen Spannzustand, in dem er gespannt ist, verstellbar. Bei der Montage eines Häckselmessers 101 wird er in den Spannzustand überführt, so dass er fest in der Hilfsbohrung 104 eingespannt ist. Durch Zurückstellen des Spannmechanismus 7 vom Spannzustand in den Grundzustand kann das Werkzeug 1 nach der Endmontage des Häckselmessers 101 von der Häckseltrommel 10 wieder gelöst werden.

Das Werkzeug 1 weist einen Rahmen 3 sowie einen Schaft 4 auf, wobei der Rahmen 3 den Schaft 4 zumindest überwiegend umgibt. Der Rahmen 3 weist eine Aussparung 31 auf, die das Positionieren des Werkzeugs 1 am Messerhalter 103 des aktuell zu montierenden Häckselmessers 101 ermöglicht, wenn in Rotationsrichtung 12 der Häckseltrommel 10 vor dem aktuell mit dem Werkzeug 1 zu montierenden Häckselmesser 101 bereits ein zuvor montiertes Häckselmesser 101 angeordnet ist. Bauraumbedingt können auch Werkzeuge 1 ohne eine solche Aussparung 31 im Rahmen 3 nutzbar sein.

Der Schaft 4 ist relativ zum Rahmen 3 in eine Verschieberichtung 42 entlang einer Verschiebeachse 2 reversibel verschiebbar.

Das Werkzeug 1 weist zudem ein Verstellmittel 5 auf, das hier am Schaft 4 angeordnet ist. Das Verstellmittel 5 ist zum reversiblen Verstellen des Spannmechanismus 7 vom Grundzustand in den Spannzustand vorgesehen. Es ist kegelförmig ausgebildet und verjüngt sich in Verschieberichtung 42. Das Verstellmittel 5 wird beim Verschieben des Schaftes 4 mit ihm relativ zum Spannmechanismus 7 und/oder zum Rahmen 3 verschoben. Es wirkt dann mit dem Spannmechanismus 7 zusammen.

Der Spannmechanismus 7 weist mehrere Spannelemente 71 auf, die gleichmäßig um den Schaft 4 und/oder die Verschiebeachse 2 verteilt angeordnet sind. Die Spannelemente 71 sind jeweils reversibel vom Grundzustand in den Spannzustand verstellbar. Dabei ist ein Abstand (nicht gezeigt) der Spannelemente 71 vom Schaft 4 und/oder der Verschiebeachse 2 im Grundzustand wenigstens teilweise kleiner als im Spannzustand.

Beim Verschieben des Schaftes 4 in die Verschieberichtung 42 gerät das Verstellmittel 5 in Anlage an die Spannelemente 71. Dabei drückt es die Spannelemente 71 aufgrund seiner Kegelform auseinander, so dass sich der Abstand der Spannelemente 71 zum Schaft 4 zumindest teilweise vergrößert. Bei Eingriff des Spannmechanismus 7 in die Hilfsbohrung 104 des Messerhalters 103 werden die Spannelemente 71 dadurch gegen eine Innenwand (nicht bezeichnet) der Hilfsbohrung 104 gedrückt und der Spannmechanismus 7 so in der Hilfsbohrung 104 verspannt. Beim Zurückschieben des Schafts 4 gegen die Verschieberichtung 42 wird das Verstellmittel 5 mit dem Schaft 4 zurückgeschoben. Dadurch gerät es außer Eingriff mit dem Spannmechanismus 7. Die Spannelemente 71 werden dadurch vom Spannzustand in den Grundzustand zurückgestellt. Dadurch liegen sie nicht mehr an der Innenwand der Hilfsbohrung 104 an. Das Werkzeug 1 ist dann vom Messerhalter 103 abnehmbar.

Das Werkzeug 1 weist weiterhin ein Positionierungsmittel 6 auf. Das Positionierungsmittel 6 ist zum Positionieren des Häckselmessers 101 an der Häckseltrommel 10 vorgesehen. Es ist dafür an einem ersten Ende 45 des Verstellmittels 5 über den Spannmechanismus 7 hinausragend angeordnet. Dadurch kann es bei einem Einführen des Spannmechanismus 7 in die Hilfsbohrung 104 in ein Gegenpositionierungsmittel 102 des Häckselmessers 101 eingreifen. Bei Eingriff des Positionierungsmittels 6 in das Gegenpositionierungsmittel 102 wird das Häckselmesser 101 daher durch das Verstellen des Spannmechanismus 7 vom Grundzustand in den Spannzustand das Positionierungsmittel 6 in eine definierte Position (nicht gezeigt) verstellt, und das Häckselmesser 101 dadurch in eine Montageposition (nicht gezeigt) verschoben.

Das Positionierungsmittel 6 und das Gegenpositionierungsmittel 102 sind dafür in Bezug auf ihre Form und Ausmaße korrespondierend zueinander ausgebildet. Im vorliegenden Ausführungsbeispiel ist das Positionierungsmittel 6 als ein zylindrischer Dorn ausgebildet, der sich zu seinem offenen Ende hin verjüngt. Das Gegenpositionierungsmittel 102 kann dementsprechend als eine zylindrische Ausnehmung, insbesondere Durchgangsbohrung, ausgebildet sein.

Das Verstellmittel 5 weist an seinem verjüngten Ende (nicht bezeichnet) etwa den Durchmesser (nicht bezeichnet) des Schaftes 4 auf. An seinem dem verjüngten Ende gegenüberliegenden ersten Ende 45 ist der Durchmesser daher größer als der des Schaftes 4. Dort schließt sich das Positionierungsmittel 6 mit einem dem Durchmesser des Schaftes 4 etwa entsprechenden Durchmesser an das Verstellmittel 5 an. Der gegenüber dem Durchmesser des Schaftes 4 vergrößerte Durchmesser des Verstellmittels 5 bildet einen Anschlag 54 beim Einführen des Werkzeugs 1 in die Hilfsbohrung 104 des Messerhalters 103. Der Anschlag 54 begrenzt eine Tiefe, in der das Positionierungsmittel 6 in das Gegenpositionierungsmittel 102 eingreift. Bei am Messerhalter 103 positioniertem Werkzeug 1 liegt der Anschlag 54 an einer Oberfläche (nicht bezeichnet) des Häckselmessers 101 an.

Der Schaft 4, das Verstellmittel 5 sowie das Positionierungsmittel 6 sind hier einstückig gefertigt und erstrecken sich entlang der Verschiebeachse 2. Sie sind rotationssymmetrisch ausgebildet. Dabei durchsetzt der Schaft 4 den Spannmechanismus 7 mittig. Zudem durchsetzt der Schaft 4 den Spannmechanismus 7 vollständig.

Da der Spannmechanismus 7 konzentrisch zur Verschiebeachse 2 angeordnet ist, und sich der Abstand der Spannelemente 71 beim Verstellen des Spannmechanismus 7 vom Grundzustand in den Spannzustand gleichermaßen vergrößert, behält der Schaft 4 dabei seine zentrische Anordnung bei. Daher bestimmt die Position der Hilfsbohrung 104 am Messerhalter 103 die definierte Position, in die das Häckselmesser 101 mit dem Positionierungsmittel 6 beim Verspannen des Spannmechanismus 7 verschoben wird.

In einer alternativen Ausführungsform, die hier nicht dargestellt ist, kann der Spannmechanismus 7 selbst als Positionierungsmittel 6 genutzt werden.

Zum Verschieben des Schaftes 4 umfasst das Werkzeug 1 ein manuell betätigbares Betätigungsmittel 8. Das Betätigungsmittel 8 ist hier als Drehknopf ausgebildet. Im Rahmen der Ausführungsform der Fig. 2 werden die Begriffe Betätigungsmittel 8 und Drehknopf synonym verwendet. Das Werkzeug 1 ist daher einhändig bedienbar. Der Drehknopf 8 ist um eine Drehachse, die hier der Verschiebeachse 2 entspricht, in eine Drehrichtung 83 relativ zum Rahmen 3 drehbar. Dabei ist er fluchtend zur Verschiebeachse 2 und zum Schaft 4 vorgesehen. Der Drehknopf 8 ist an einem dem ersten Ende 45 des Verstellmittels 5, an dem das Positionierungsmittel 6 angeordnet ist, gegenüberliegenden zweiten Ende 46 des Schaftes 4 angeordnet. Er weist ein Gewinde (nicht bezeichnet) auf, das mit einem Gegengewinde 43 am Schaft 4 so zusammenwirkt, dass der Schaft 4 in die Verschieberichtung 42 verschoben wird, wenn der Drehknopf 8 in die Drehrichtung 83 gedreht wird.

In der hier dargestellten Ausführungsform verjüngt sich das kegelförmige Verstellmittel 5 mit einem nur sehr flachen Winkel (nicht bezeichnet). Beim Einschieben des Verstellmittels 5 in den Spannmechanismus 7 werden die Spannelemente 71 mit dem Verstellmittel 5 auseinander gedrängt. Aufgrund der flachen Kegelform des Verstellmittels 5 legt sich dieses dabei zumindest bereichsweise an eine Innenfläche (nicht bezeichnet) der Spannelemente 71 an. Dadurch ist der Spannmechanismus 7 mit einer nur geringen Kraft in der Hilfsbohrung 104 verspannbar. Das heißt der Drehknopf 8 muss nur mit geringem Kraftaufwand gedreht werden, um den Spannmechanismus 7 in der Hilfsbohrung 104 zu verspannen.

Beim Betätigen des Drehknopfes 8 gegen die Drehrichtung 83 wird dieser gegenüber dem Schaft 4 gedreht. Dadurch hebt er sich in Verschieberichtung 42 vom Rahmen 3 ab. Dafür ist der Schaft 4 gegen ein Verdrehen relativ zum Rahmen 3 gesichert. Dadurch dreht er sich beim Drehen des Drehknopfes 8 nicht mit diesem. Der Schaft 4 kann dann durch Druck auf den Drehknopf 8 gegen die Verschieberichtung 42 verschoben werden. Dadurch gerät das Verstellmittel 5 außer Eingriff mit den Spannelementen 71. Dadurch stellen sich diese selbsttätig vom Spannzustand in den Grundzustand zurück.

Die Verdrehsicherung 40 (s. Fig. (c)) umfasst hier an gegenüberliegenden Seiten des Schaftes 4 jeweils einen planen Einschnitt 32, in den jeweils eine ortsfest am Werkzeug 1 angeordnete Anformung 41 eingreift. Durch den Eingriff der Anformungen 41 in die Einschnitte 32 ist der Schaft 4 nicht um die Verschiebeachse 2 drehbar.

Das Werkzeug 1 weist zudem ein Haltemittel 9 zum Festhalten des Werkzeugs 1 während des Betätigens des Betätigungsmittels 8 auf. Das Haltemittel 9 ist ortsfest am Rahmen 3 angeordnet. Es ist einhändig betätigbar. Dadurch kann das Werkzeug 1 beim Betätigen des Betätigungsmittels 8 mit einer Hand eines Monteurs festgehalten werden, während dieser das Betätigungsmittel 8 mit seiner anderen Hand betätigt.

Das Haltemittel 9 ist bei dieser Ausführungsform des Werkzeugs 1 als ein hebelförmiger Griff ausgebildet.

Fig. 2 (d) zeigt das an den Messerhalter 103 angelegte Werkzeug 1 beim Montieren des Häckselmessers 101.

Beim Vormontieren wird das Häckselmesser 101 so zum Messerhalter 103 positioniert, dass das Gegenpositionierungsmittel 102 des Häckselmessers 101 und die Hilfsbohrung 103 des Messerhalters 103 einander so weit überlappen, dass das Positionierungsmittel in das Gegenpositionierungsmittel 102 einführbar ist. Eine abschließende Positionierung des Häckselmessers 101 erfolgt nachfolgend mit dem Werkzeug 1. Dieses wird an den Messerhalter angelegt, wobei der Spannmechanismus 7 in die Hilfsbohrung 104 eingeführt wird.

Das vormontierte Häckselmesser 101 ist unterhalb des Messerhalters 103 angeordnet. Es weist das Gegenpositionierungsmittel 102 auf, in das das Positionierungsmittel 6 beim Einführen des Spannmechanismus 7 in die Hilfsbohrung 104 eingeführt wird. Das Gegenpositionierungsmittel 102 ist hier als Durchgangsbohrung ausgebildet. Zum Festhalten ist unterhalb des Häckselmessers 101 eine Konterleiste als Kontermittel 105 angeordnet, die mittels Schrauben 106 befestigt ist, so dass das Häckselmesser 101 vormontiert, das heißt noch verschiebbar, ist.

Durch Drehen des Betätigungsmittels 8 wird der Schaft 4 in Verschieberichtung 42 verschoben, so dass das Verstellmittel 5 in Eingriff mit den Spannelementen 71 des Spannmechanismus 7 gerät und diese nach außen drückt, bis sie zumindest teilweise an der Innenwand der Hilfsbohrung 104 anliegen, und der Spannmechanismus 7 in der Hilfsbohrung 104 verspannt ist. Dabei wird der Schaft 4 zentrisch in der Hilfsbohrung 104 positioniert und das Häckselmesser 101 mittels des Positionierungsmittels 6 in die definierte Position verschoben. Anschließend können die Schrauben 106 angezogen und das Häckselmesser 101 dadurch zwischen Messerhalter 103 und Kontermittel 105 festgelegt werden. Da das Häckselmesser 101 durch die Werkzeuge 1 fixiert ist, können die Schrauben 106 ohne ein Verrutschen des Häckselmessers 101 festgeschraubt werden.

Fig. 2 (d) zeigt das Werkzeug 1, wenn der Spannmechanismus 7 in den Spannzustand verstellt ist. Durch Zurückschieben des Schaftes 4 gegen die Verschieberichtung 42, das heißt durch Zurückdrehen des Betätigungsmittels 8 gegen die Drehrichtung 83, wird der Spannmechanismus 7 in den Grundzustand zurückgestellt. Das Werkzeug 1 ist dann vom Messerhalter 103 abnehmbar.

Zur Montage eines Häckselmessers 101 werden vorteilhaft zwei solche Werkzeuge 1 genutzt. Dafür werden zwei voneinander beabstandete Hilfsbohrungen 104 am Messerhalter 103 und Gegenpositionierungsmittel 102 am Häckselmesser 101 verwendet. Mit dem zweiten Werkzeug 1 wird das Häckselmesser 101 auf die vorstehend beschriebene Art und Weise positioniert. Dadurch ist das Häckselmesser 101 bei der Endmontage an zwei Positionen, das heißt entlang seiner Längserstreckung, definiert positioniert.

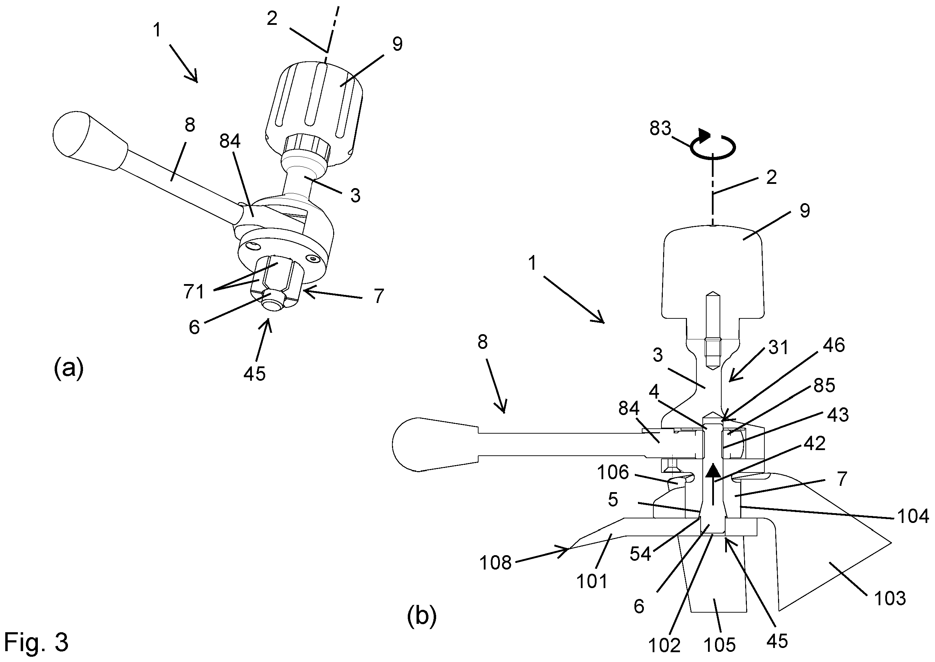

Fig. 3 zeigt eine weitere Ausführungsform eines Werkzeugs 1. Dabei zeigt Fig. 3 (a) eine perspektivische Ansicht des Werkzeugs 1. Fig. 3 (b) zeigt das an den Messerhalter 103 angelegte Werkzeug 1 beim Montieren des Häckselmessers 101.

Das Werkzeug 1 der zweiten Ausführungsform unterscheidet sich von der ersten Ausführungsform durch das Betätigungsmittel 8 und das Haltemittel 9. Gegenüber der in Fig. 1 gezeigten ersten Ausführungsform sind hier die Anordnungen des Betätigungsmittels 8 und des Haltemittels 9 vertauscht.

Das Betätigungsmittel 8 ist zudem als ein Hebel ausgeführt, der seitlich auskragend am Schaft 4 angeordnet ist. Im Rahmen der Ausführungsform der Fig. 3 werden die Begriffe Betätigungsmittel 8 und Hebel synonym verwendet. Er ist in und gegen die Drehrichtung 83 um die Verschiebeachse 2 drehbar. An dem Hebel 8 ist ein Umschaltmittel, hier eine Ratsche 84, angeordnet. Die Ratsche 84 ist in bekannter Art und Weise umschaltbar. Sie wirkt mit einer Gewindehülse 85 zusammen, die ein Gewinde aufweist, das mit dem Gegengewinde 43 des Schafts 4 zusammenwirkt. Dieser ist in bereits beschriebener Art und Weise gegen ein Verdrehen gesichert.

In einer ersten Schaltstellung der Ratsche 84 wird durch Drehen des Hebels 8 in und gegen die Drehrichtung 83 der Schaft 4 in die Verschieberichtung 42 verschoben. Nach Umschalten der Ratsche 84 in eine zweite Schaltstellung wird durch Drehen des Hebels 8 in und gegen die Drehrichtung 83 der Schaft 4 gegen die Verschieberichtung 42 verschoben.

Das Haltemittel 9 ist weiterhin als knopfförmiger Haltegriff ausgeführt und fluchtend zum Schaft 4 angeordnet. Sowohl der Hebel 8 als auch der Haltegriff 9 sind jeweils einhändig bedienbar, so dass das Werkzeug 1 beim Betätigen des Hebels 8 mit der einen Hand mit der anderen Hand am Haltegriff 9 festgehalten werden kann.

Analog zur ersten Ausführungsform (siehe Fig. 1 und 2) wird beim Verschieben des Schafts 4 durch Betätigen des Hebels 8 der Spannmechanismus 7 mittels des kegelförmigen Verstellmittels 5 verstellt, wobei er in der Hilfsbohrung 104 verspannt wird. Dabei wird das Häckselmesser 101 mittels des in das Gegenpositionierungsmittel 102 eingreifenden Positionierungsmittels 6 in die Montageposition verschoben.

Fig. 4 (a) und (b) zeigen jeweils eine perspektivische Ansicht eines Messerhalters 103 mit am Messerhalter 103 endmontiertem Häckselmesser 101. Das Häckselmesser 101 der Fig. 4 (a) unterscheidet sich von dem Häckselmesser 101 der Fig. 4 (b) durch die Ausbildung der Gegenpositionierungsmittel 102.

Das Häckselmesser 101 der Fig. 4 (a) weist ein erstes und ein zweites Gegenpositionierungsmittel 102 auf, die als im Querschnitt kreisrunde Durchgangsbohrung ausgebildet sind. Der Messerhalter 103 weist eine erste sowie eine zweite Hilfsbohrung 104 auf, die ebenfalls als im Querschnitt kreisrunde Durchgangsbohrungen ausgebildet sind. Die Hilfsbohrungen 104 und die Gegenpositionierungsmittel 102 sind in eine Längsrichtung 14, in die sich das Häckselmesser 101 und der Messerhalter 103 erstrecken, gleichweit versetzt zueinander angeordnet. Dadurch sind sie im endmontierten Zustand des Häckselmessers 101am Messerhalter 103, den die Fig. 4 (a) und (b) zeigen, fluchtend zueinander angeordnet. Dabei ist jeweils ein Durchmesser der Hilfsbohrungen 104 größer als ein Durchmesser der Gegenpositionierungsmittel 102 102, so dass die Hilfsbohrungen 104 jeweils den Spannmechanismus 7 eines Werkzeugs 1 und die Gegenpositionierungsmittel 102 jeweils das Positionierungsmittel 6 eines Werkzeugs 1 aufnehmen können.

Das Häckselmesser 101 ist mittels Schrauben 106 am Messerhalter 103 festgelegt. Dafür weist der Messerhalter 103 Durchgangsbohrungen 107 zur Aufnahme der Schrauben 106 auf. Damit die Schrauben 106 den Erntegutfluss nicht behindern, sind sie am Messerhalter 103 abgesenkt angeordnet. Das Häckselmesser 101 weist ebenfalls Durchgangsbohrungen (nicht gezeigt) zur Aufnahme der Schrauben 106 auf, die fluchtend zu denen des Messerhalters 103 angeordnet sind. Verschraubt werden die Schrauben 106 in Gewindebohrungen (nicht gezeigt) des Kontermittels 105 (s. Fig. 2(d) und 3(b)), die ebenfalls fluchtend zu den Durchgangsbohrungen 107 des Messerhalters 103 sowie des Häckselmessers 101 angeordnet sind. Das Häckselmesser wird daher zwischen dem Kontermittel 105 und dem Messerhalter 103 reib- und/oder formschlüssig festgelegt. Indem die Durchgangsbohrungen im Häckselmesser 101 als Langlöcher ausgebildet sind, die sich in eine Querrichtung 15 quer zur Längsrichtung 14 erstrecken, kann das Häckselmesser 101 in Querrichtung 15 ausweichen, wenn es mit seiner Schneidkante 108 auf ein Hindernis (nicht gezeigt) auftrifft, oder wenn ein Fremdkörper auf das Häckselmesser auftrifft. Dadurch können Beschädigungen des Häckselmessers 101 und/oder der Häckseltrommel 10 vermieden werden.

Durch gleichzeitige Nutzung zweier Werkzeuge 1 beim Montieren des Häckselmessers 101 wird das Häckselmesser 101 an zwei in Längsrichtung 14 voneinander beabstandeten Positionen ausgerichtet. Dadurch ist für alle Häckselmesser 101 mit dem Werkzeug 1 ein gleichbleibender Schnittspalt 109 (s. Fig. 1) wiederholbar, einfach und präzise erstellbar.

Gegenüber der Ausführungsform der Fig. 4 (a) weist das Häckselmesser 101 der Fig. 4 (b) ein erstes und ein zweites Gegenpositionierungsmittel 102 auf, die jeweils als Langlochbohrungen ausgeführt sind, welche sich in Querrichtung 14 erstrecken. Bei dieser Ausführungsform ist die Montageposition des Häckselmessers 101 in Querrichtung 14 einstellbar, beispielsweise um Toleranzen auszugleichen.

## Patentansprüche

1. Werkzeug (1) zum Montieren eines Häckselmessers (101) an eine Häckseltrommel (10), umfassend:
ein Positionierungsmittel (6), das zum Positionieren des Häckselmessers (101) an der Häckseltrommel (10) vorgesehen ist, **gekennzeichnet durch**
• einen Spannmechanismus (7) zum lösbaren Fixieren des Werkzeugs (1) in einer Hilfsbohrung (104) der Häckseltrommel (10), wobei der Spannmechanismus (7) reversibel von einem Grundzustand, in dem er ungespannt ist, in einen Spannzustand, in dem er gespannt ist, verstellbar ist;
• einen Rahmen (3); und
• ein Verstellmittel (5), das relativ zum Spannmechanismus (7) und/oder zum Rahmen (3) in eine Verschieberichtung (42) entlang einer Verschiebeachse (2) reversibel verschiebbar ist und zum reversiblen Verstellen des Spannmechanismus (7) vom Grundzustand in den Spannzustand vorgesehen ist.

2. Werkzeug (1) nach Anspruch 1, **dadurch gekennzeichnet, dass** das Positionierungsmittel (6) an einem ersten Ende (45) des Verstellmittels (5) über den Spannmechanismus (7) hinausragend angeordnet ist, oder der Spannmechanismus (7) das Positionierungsmittel (6) bildet.

3. Werkzeug (1) nach einem der vorherigen Ansprüche, **dadurch gekennzeichnet, dass** der Spannmechanismus (7) mindestens zwei Spannelemente (71) aufweist, wobei mindestens eines der Spannelemente (71) relativ zur Verschiebeachse (2) verstellbar ist.

4. Werkzeug (1) nach einem der vorherigen Ansprüche, **dadurch gekennzeichnet, dass** das Verstellmittel (5) an einem Schaft (4) angeordnet ist, und dass der Schaft (4) den Spannmechanismus (7) mittig durchsetzt.

5. Werkzeug (1) nach einem der vorherigen Ansprüche, **dadurch gekennzeichnet, dass** das Verstellmittel (5) kegelförmig ausgebildet ist, und sich in oder gegen die Verschieberichtung (42) verjüngt.

6. Werkzeug (1) nach Anspruch 4,
**dadurch gekennzeichnet,**
**dass** der Schaft (4), das Verstellmittel (5) und/oder das Positionierungsmittel (6) rotationssymmetrisch zur Verschiebeachse (2) ausgebildet sind.

7. Werkzeug (1) nach einem der vorherigen Ansprüche, **dadurch gekennzeichnet, dass** es ein manuell betätigbares Betätigungsmittel (8) umfasst, welches zum Verschieben des Verstellmittels (5) und/oder des Schafts (4) relativ zum Rahmen (3) vorgesehen ist.

8. Werkzeug (1) nach Anspruch 7,
**dadurch gekennzeichnet,**
**dass** das Betätigungsmittel (8) ein Gewinde aufweist, das mit einem Gegengewinde (43) am Schaft (4) zusammenwirkt, sodass der Schaft (4) in die Verschieberichtung (42) verschoben wird, wenn das Betätigungsmittel (8) in oder gegen eine Drehrichtung (83) gedreht wird.

9. Werkzeug (1) nach einem der vorherigen Ansprüche 4 oder 6,
**dadurch gekennzeichnet,**
**dass** der Schaft (4) gegen ein Verdrehen relativ zum Rahmen (3) gesichert ist.

10. Werkzeug (1) nach einem der vorherigen Ansprüche 7 oder 8,
**dadurch gekennzeichnet,**
**dass** das Betätigungsmittel (8) als ein Drehknopf oder als ein Hebel ausgebildet ist.

11. Werkzeug (1) nach einem der vorherigen Ansprüche 7, 8, oder 10,
**dadurch gekennzeichnet,**
**dass** das Werkzeug (1) ein Haltemittel (9) zum Festhalten des Werkzeugs (1) während des Betätigens des Betätigungsmittels (8) aufweist.

12. Verfahren zum Montieren eines Häckselmessers (101) an eine Häckseltrommel (10), bei dem das Häckselmesser (101) mit einem ersten Werkzeug (1) nach einem der vorherigen Ansprüche an der Häckseltrommel (10) positioniert, und dann an der Häckseltrommel (10) festgelegt, insbesondere angeschraubt, wird, wobei das Werkzeug (1) anschließend von der Häckseltrommel (10) gelöst wird.

13. Verfahren nach Anspruch 12, wobei die Häckseltrommel (10) wenigstens einen Messerhalter (103) aufweist, wobei das Häckselmesser (101) an den Messerhalter (103) montierbar ist, wobei der Messerhalter (103) eine erste Hilfsbohrung (104) und das Häckselmesser (101) ein erstes Gegenpositionierungsmittel (102) aufweisen, wobei das Verfahren die Schritte umfasst:
a. Einführen eines Spannmechanismus (7) des ersten Werkzeugs (1) in die erste Hilfsbohrung (104), wobei sich der Spannmechanismus (7) in einem Grundzustand befindet, sodass ein Positionierungsmittel (6) des ersten Werkzeugs (1) in das erste Gegenpositionierungsmittel (102) des Häckselmessers (101) eingreift; und
b. Überführen des Spannmechanismus (7) des ersten Werkzeugs (1) vom Grundzustand in einen Spannzustand, wobei der Spannmechanismus (7) des ersten Werkzeugs (1) in der ersten Hilfsbohrung (104) verspannt und das Positionierungsmittel (6) des ersten Werkzeugs (1) relativ zur ersten Hilfsbohrung (104) verstellt, insbesondere zentriert, wird.

14. Verfahren nach Anspruch 13, **dadurch gekennzeichnet, dass** das Häckselmesser (101) vor Einführen des Spannmechanismus (7) in die erste Hilfsbohrung (104) am Messerhalter (103), insbesondere lose, vormontiert wird.

15. Verfahren nach einem der Ansprüche 13 - 14, **dadurch gekennzeichnet, dass** zum Montieren des Häckselmessers (101) ein zweites Werkzeug (1) nach einem der Ansprüche 1 - 9 genutzt wird, wobei der Messerhalter (103) eine zweite Hilfsbohrung (104) und das Häckselmesser (101) ein zweites Gegenpositionierungsmittel (102) aufweisen, mit den Schritten:
c. Einführen des Spannmechanismus (7) des zweiten Werkzeugs (1) in die zweite Hilfsbohrung (104), wobei sich der Spannmechanismus (7) des zweiten Werkzeugs (1) in einem Grundzustand befindet, sodass das Positionierungsmittel (6) des zweiten Werkzeugs (1) in das zweite Gegenpositionierungsmittel (102) des Häckselmessers (101) eingreift; und
d. Überführen des Spannmechanismus (7) des zweiten Werkzeugs (1) vom Grundzustand in einen Spannzustand, wobei der Spannmechanismus (7) des zweiten Werkzeugs (1) in der zweiten Hilfsbohrung (104) verspannt und das Positionierungsmittel (6) des zweiten Werkzeugs (1) relativ zur zweiten Hilfsbohrung (104) verstellt, insbesondere zentriert, wird.

16. Verfahren nach einem der Ansprüche 13 - 15, **dadurch gekennzeichnet, dass** das Häckselmesser (101) anschließend am Messerhalter (103) festgelegt, insbesondere festgeschraubt, wird.

17. Verfahren nach einem der Ansprüche 13 - 16, **dadurch gekennzeichnet, dass** beide Werkzeuge (1) nach dem Festlegen des Häckselmessers (101) durch Überführen des jeweiligen Spannmechanismus (7) vom Spannzustand in den Grundzustand von der Häckseltrommel (10) gelöst werden.

## Claims

1. A tool (1) for mounting a chopper blade (101) on a chopper drum (10), comprising:
a positioning means (6) provided for positioning the chopper blade (101) on the chopper drum (10), **characterized by**
• a clamping mechanism (7) for releasably fixing the tool (1) in an auxiliary bore (104) of the chopper drum (10), the clamping mechanism (7) being reversibly adjustable from a basic state in which it is unclamped to a clamped state in which it is clamped;
• a frame (3); and
• an adjusting means (5) which is reversibly displaceable relative to the clamping mechanism (7) and/or to the frame (3) in a displacement direction (42) along a displacement axis (2) and is provided for reversibly adjusting the clamping mechanism (7) from the basic state to the clamped state.

2. The tool (1) according to claim 1, **characterized in that** the positioning means (6) is arranged at a first end (45) of the adjusting means (5) projecting beyond the clamping mechanism (7), or the clamping mechanism (7) forms the positioning means (6).

3. The tool (1) according to any one of the preceding claims, **characterized in that** the clamping mechanism (7) has at least two clamping elements (71), at least one of the clamping elements (71) being adjustable relative to the displacement axis (2).

4. The tool (1) according to any one of the preceding claims, **characterized in that** the adjusting means (5) is arranged on a shaft (4) and that the shaft (4) passes centrally through the clamping mechanism (7).

5. The tool (1) according to any one of the preceding claims, **characterized in that** the adjusting means (5) is conical and tapers in or counter to the displacement direction (42).

6. The tool (1) according to claim 4, **characterized in that** the shaft (4), the adjusting means (5), and/or the positioning means (6) are rotationally symmetrical to the displacement axis (2).

7. The tool (1) according to any one of the preceding claims, **characterized in that** it comprises a manually operable actuating means (8) which is provided for displacing the adjusting means (5) and/or the shaft (4) relative to the frame (3).

8. The tool (1) according to claim 7, **characterized in that** the actuating means (8) has a thread which cooperates with a mating thread (43) on the shaft (4), so that the shaft (4) is displaced in the displacement direction (42) when the actuating means (8) is rotated in or counter to a direction of rotation (83).

9. The tool (1) according to any one of preceding claims 4 or 6, **characterized in that** the shaft (4) is secured against rotation relative to the frame (3).

10. The tool (1) according to any one of preceding claims 7 or 8, **characterized in that** the actuating means (8) is embodied as a rotary knob or as a lever.

11. The tool (1) according to any one of preceding claims 7, 8, or 10, **characterized in that** the tool (1) has a holding means (9) for holding the tool (1) in place during actuation of the actuating means (8).

12. A method for mounting a chopper blade (101) on a chopper drum (10), in which the chopper blade (101) is positioned on the chopper drum (10) with a first tool (1) according to any one of the preceding claims and is then fixed, in particular screwed, to the chopper drum (10), the tool (1) being subsequently detached from the chopper drum (10).

13. The method according to claim 12, wherein the chopper drum (10) has at least one blade holder (103), wherein the chopper blade (101) is mountable on the blade holder (103), wherein the blade holder (103) has a first auxiliary bore (104) and the chopper blade (101) has a first counter-positioning means (102), the method comprising the steps of:
a. inserting a clamping mechanism (7) of the first tool (1) into the first auxiliary bore (104), the clamping mechanism (7) being in a basic state, so that a positioning means (6) of the first tool (1) engages in the first counter-positioning means (102) of the chopper blade (101); and
b. converting the clamping mechanism (7) of the first tool (1) from the basic state into a clamped state, the clamping mechanism (7) of the first tool (1) being clamped in the first auxiliary bore (104) and the positioning means (6) of the first tool (1) being adjusted, in particular centered, relative to the first auxiliary bore (104).

14. The method according to claim 13, **characterized in that** the chopper blade (101) is pre-assembled, in particular loosely, on the blade holder (103) before insertion of the clamping mechanism (7) into the first auxiliary bore (104).

15. The method according to any one of claims 13-14, **characterized in that** a second tool (1) according to any one of claims 1-9 is used to mount the chopper blade (101), the blade holder (103) having a second auxiliary bore (104) and the chopper blade (101) having a second counter-positioning means (102), comprising the steps of:
c. inserting the clamping mechanism (7) of the second tool (1) into the second auxiliary bore (104), the clamping mechanism (7) of the second tool (1) being in a basic state, so that the positioning means (6) of the second tool (1) engages in the second counter-positioning means (102) of the chopper blade (101); and
d. converting the clamping mechanism (7) of the second tool (1) from the basic state into a clamped state, the clamping mechanism (7) of the second tool (1) being clamped in the second auxiliary bore (104) and the positioning means (6) of the second tool (1) being adjusted, in particular centered, relative to the second auxiliary bore (104).

16. The method according to any one of claims 13-15, **characterized in that** the chopper blade (101) is subsequently fixed, in particular screwed, to the blade holder (103).

17. The method according to any one of claims 13-16, **characterized in that** both tools (1) are released from the chopper drum (10) after the chopper blade (101) has been fixed by converting the respective clamping mechanism (7) from the clamped state into the basic state.

## Revendications

1. Outil (1) de montage d'un couteau (101) de hachage sur un tambour (10) de hachage comprenant :
un moyen (6) de mise en position, qui est prévu pour la mise en position du couteau (101) de hachage sur le tambour (10) de hachage, **caractérisé par**
• un mécanisme (7) de serrage pour l'immobilisation amovible de l'outil (1) dans un alésage (104) auxiliaire du tambour (10) de hachage, dans lequel le mécanisme (7) de serrage est réglable de manière réversible d'un état normal, dans lequel il n'est pas serré, à un état de serrage, dans lequel il est serré ;
• un cadre (3) ; et
• un moyen (5) de réglage, qui peut coulisser de manière réversible le long d'un axe (2) de coulissement dans un sens (42) de coulissement par rapport au mécanisme (7) de serrage et/ou au cadre (3) et qui est prévu pour le réglage réversible du mécanisme (7) de serrage de l'état normal à l'état de serrage.

2. Outil (1) suivant la revendication 1, **caractérisé en ce que** le moyen (6) de mise en position est monté à une première extrémité (45) du moyen (5) de réglage en faisant saillie du mécanisme (7) de serrage ou le mécanisme (7) de serrage forme le moyen (6) de mise en position.

3. Outil (1) suivant l'une des revendications précédentes, **caractérisé en ce que** le mécanisme (7) de serrage a au moins deux éléments (71) de serrage, dans lequel au moins l'un des éléments (71) de serrage est réglable relativement à l'axe (2) de coulissement.

4. Outil (1) suivant l'une des revendications précédentes, **caractérisé en ce que** le moyen (5) de réglage est monté sur un arbre (4) et **en ce que** l'arbre (4) passe au milieu du mécanisme (7) de serrage.

5. Outil (1) suivant l'une des revendications précédentes, **caractérisé en ce que** le moyen (5) de réglage est de constitution conique et se rétrécit dans le sens (42) du coulissement ou dans le sens contraire.

6. Outil (1) suivant la revendication 4, **caractérisé en ce que** l'arbre (4), le moyen (5) de réglage et/ou le moyen (6) de mise en position sont de révolution par rapport à l'axe (2) de coulissement.

7. Outil (1) suivant l'une des revendications précédentes, **caractérisé en ce qu'**il comprend un moyen (8) d'actionnement pouvant être actionné manuellement, qui est prévu pour le coulissement du moyen (5) de réglage et/ou de l'arbre (4) par rapport au cadre (3).

8. Outil (1) suivant la revendication 7, **caractérisé en ce que** le moyen (8) d'actionnement a un filetage, qui coopère avec un filetage (43) antagoniste de l'arbre (4) de manière à faire coulisser l'arbre (4) dans le sens (42) de coulissement lorsque l'on tourne le moyen (8) d'actionnement dans un sens (83) de rotation ou dans le sens contraire.

9. Outil (1) suivant l'une des revendications 4 ou 6 précédentes, **caractérisé en ce que** l'arbre (4) est protégé d'une torsion par rapport au cadre (3).

10. Outil (1) suivant l'une des revendications 7 ou 8 précédentes, **caractérisé en ce que** le moyen (8) d'actionnement est constitué sous la forme d'un bouton à tourner ou d'un levier.

11. Outil (1) suivant l'une des revendications 7, 8 ou 10 précédentes, **caractérisé en ce que** l'outil (1) a un moyen (9) de fixation pour la fixation de l'outil (1) pendant l'actionnement du moyen (8) d'actionnement.

12. Procédé de montage d'un couteau (101) de hachage sur un tambour (10) de hachage, dans lequel on met le couteau (101) de hachage, par un premier outil (1) suivant l'une des revendications précédentes, en position sur le tambour (10) de hachage et ensuite on le fixe sur le tambour (10) de hachage, en particulier en le vissant, dans lequel on retire ensuite l'outil (1) du tambour (10) de hachage.

13. Procédé suivant la revendication 12, dans lequel le tambour (10) de hachage a au moins un porte-couteau (103), dans lequel le couteau (101) de hachage peut être monté sur le porte-couteau (103), dans lequel le porte-couteau (103) a un premier alésage (104) auxiliaire et le couteau (101) de hachage a un premier moyen (102) antagoniste de mise en position, dans lequel le procédé comprend les stades :
a. introduction d'un mécanisme (7) de serrage du premier outil (1) dans le premier alésage (104) auxiliaire, dans lequel le mécanisme (7) de serrage se trouve dans un état normal, de sorte qu'un moyen (6) de mise en position du premier outil (1) attaque le premier moyen (102) antagoniste de mise en position du couteau (101) de hachage ; et
b. passage du mécanisme (7) de serrage du premier outil (1) de l'état normal à un état de serrage, dans lequel le mécanisme (7) de serrage du premier outil (1) est serré dans le premier alésage (104) auxiliaire et le moyen (6) de mise en position du premier outil (1) est réglé en particulier en étant centré, par rapport au premier alésage (104) auxiliaire.

14. Procédé suivant la revendication 13, **caractérisé en ce que** on monte à l'avance, en particulier de manière lâche, sur le porte-couteau (103) le couteau (101) de hachage avant l'introduction du mécanisme (7) de serrage dans l'alésage (104) auxiliaire.

15. Procédé suivant l'une des revendications 13 à 14, **caractérisé en ce que**, pour monter le couteau (101) de hachage, on utilise un deuxième outil (1) suivant l'une des revendications 1 à 9, dans lequel le porte-couteau (103) a un deuxième alésage (104) auxiliaire et le couteau (101) de hachage a un deuxième moyen (102) antagoniste de mise en position comprenant les stades :
c. introduction du mécanisme (7) de serrage du deuxième outil (1) dans le deuxième alésage (104) auxiliaire, dans lequel le mécanisme (7) de serrage du deuxième outil (1) se trouve dans un état normal de sorte que le moyen (6) de mise en position du deuxième outil (1) attaque le deuxième moyen (102) antagoniste de mise en position du couteau (101) de hachage ; et
d. passage du mécanisme (7) de serrage du deuxième outil (1) de l'état normal dans un état de serrage, dans lequel le mécanisme (7) de serrage du deuxième outil (1) est serré dans le deuxième alésage (104) auxiliaire et le moyen (6) de mise en position du deuxième outil (1) est réglé, en particulier centré, par rapport au deuxième alésage (104) auxiliaire.

16. Procédé suivant l'une des revendications 13 à 15, **caractérisé en ce que** l'on fixe, en particulier en le vissant, le couteau (101) de hachage ensuite sur le porte-couteau (103).

17. Procédé suivant l'une des revendications 13 à 16, **caractérisé en ce qu'**après la fixation du couteau (101) de hachage, on retire les deux outils (1) du tambour (10) de hachage en faisant passer le mécanisme (7) de serrage respectif de l'état de serrage à l'état normal.
